(19) **Europäisches Patentamt**

**European Patent Office**

**Office européen des brevets**

(11) **EP 1 032 233 A2**

(12) **EUROPEAN PATENT APPLICATION**

(43) Date of publication:
30.08.2000 Bulletin 2000/35

(51) Int. Cl.⁷: **H04Q 7/38**, H04B 1/707

(21) Application number: **00103899.1**

(22) Date of filing: **24.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.02.1999 JP 5106099**

(71) Applicant:
**Matsushita Electric Industrial Co., Ltd.**
**Kadoma-shi, Osaka 571-8501 (JP)**

(72) Inventor: **Miya, Kazuyuki**
**Kawasaki-shi, Kanagawa 215-0021 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Radio communication base station apparatus and radio communication method**

(57) A plurality of search codes generated by a first search code generator and second search code generator are switched by a selector as appropriate, distributed in predetermined positions of control channel signals and transmitted. Transmitting control channel signals with search codes distributed in different time zones can suppress peak power of the transmission amplifier when transmitting search codes. Moreover, this prevents the transmission power of the search code part from extremely increasing compared to the transmission power of the data part of control channel signals, which allows the system to be designed within the range of the capacity of the transmission amplifier.

FIG.1

EP 1 032 233 A2

## Description

BACKGROUND OF THE INVENTION

Field of the Invention

The present invention relates to a radio communication base station apparatus and radio communication method used in a radio communication system in which initial synchronization and cell search are carried out using search codes.

Description of the Related Art

As a conventional method of this type of radio communications, a method of transmitting symbols spread by a spreading code which is common to all cells and symbols spread by search codes to identify scrambling codes which vary from one cell to another by multiplexing these symbols in a mask symbol section of a downlink control channel signal ("Fast Cell Search Algorithm using Long Code Masking in DS-CDMA Asynchronous Cellular System"/TECHNICAL REPORT OF IEICE, VOL.96, NO.477, PAGE. 57-63, 1997-01) is proposed. This method allows search codes to identify scrambling code candidates, and therefore can identify scrambling codes and perform cell search speedily.

Now, various kinds of control data included in a downlink control channel signal basically only need to be received by a mobile station in its own cell with a certain level of communication quality. Therefore, the base station need not increase the level of transmission power of the control data more than the level enough to maintain a certain level of communication quality.

On the other hand, carrying out smooth handover requires search codes to be accurately received by the mobile station not only in its own cell but also in peripheral cells. Therefore, the base station needs to transmit search codes with relatively quite high power.

In the case of a CDMA/TDD system, in the case that the number of other channel signals to be code-multiplexed is small or in the case that the total transmission power of other channels is lower than the transmission power of a downlink control channel signal though the number of other channel signals to be code-multiplexed is large, the transmission power of the search code part of the control channel signal (hereinafter referred to as "search code part") is by far higher than the transmission power of the data part of the control channel signal (hereinafter referred to as "CCH data part") for the reason described above. Hence, an expensive transmission amplifier with high-output according to the peak power of the search code part and quick response is required.

Furthermore, in the case of a CDMA/FDD system, in the case that the base station carries out transmission with the maximum conceivable number of multiplexed codes for the system, that is, with its full capacity, the base station needs to transmit search codes with large power so that the mobile station can reliably perform initial synchronization and cell search. In this way, the ratio of the transmission power peak of a search code to the average transmission power of a communication channel signal (peak-to-average power ratio) increases. This also requires an expensive transmission amplifier with high output and quick response.

SUMMARY OF THE INVENTION

It is an objective of the present invention to provide a radio communication base station apparatus and radio communication method capable of actualizing a smaller and lower cost transmission amplifier by reducing maximum transmission power required for a transmission amplifier, in other words, by preventing the transmission power of the search code part from becoming extremely higher than the transmission power of the CCH data part.

In order to achieve the objective above, a radio communication base station of the present invention transmits a plurality of search codes to be multiplexed with the downlink control channel signal by distributing them in different time zones. In this way, a radio communication base station of the present invention can prevent the transmission power of the search code part from becoming extremely higher than the transmission power of the CCH data part.

BRIEF DESCRIPTION OF THE DRAWINGS

The above and other objects and features of the invention will appear more fully hereinafter from a consideration of the following description taken in connection with the accompanying drawing wherein one example is illustrated by way of example, in which;

FIG.1 is an outlined block diagram showing a configuration of a radio communication base station apparatus according to Embodiment 1;
FIG. 2A and FIG. 2B are diagrams showing a frame configuration of a transmission signal according to Embodiment 1;
FIG.3A,FIG.3B and FIG.3C are diagrams showing a slot configuration of the transmission signal according to Embodiment 1;
FIG. 4A,FIG.4B and FIG. 4C are another diagrams showing a slot configuration of the transmission signal according to Embodiment 1;
FIG.5A,FIG.5B and FIG.5C are diagrams showing the level of FDD-based transmission power according to Embodiment 1;
FIG.6 is an outlined block diagram showing a configuration of a radio communication base station apparatus according to Embodiment 2; and
FIG. 7A and FIG. 7B are diagrams showing a frame configuration of a transmission signal according to Embodiment 2.

## DETAILED DESCRIPTION OF THE PREFERRED EMBODIMENTS

With reference now to the attached drawings, the embodiments of the present invention are explained in detail below.

(Embodiment 1)

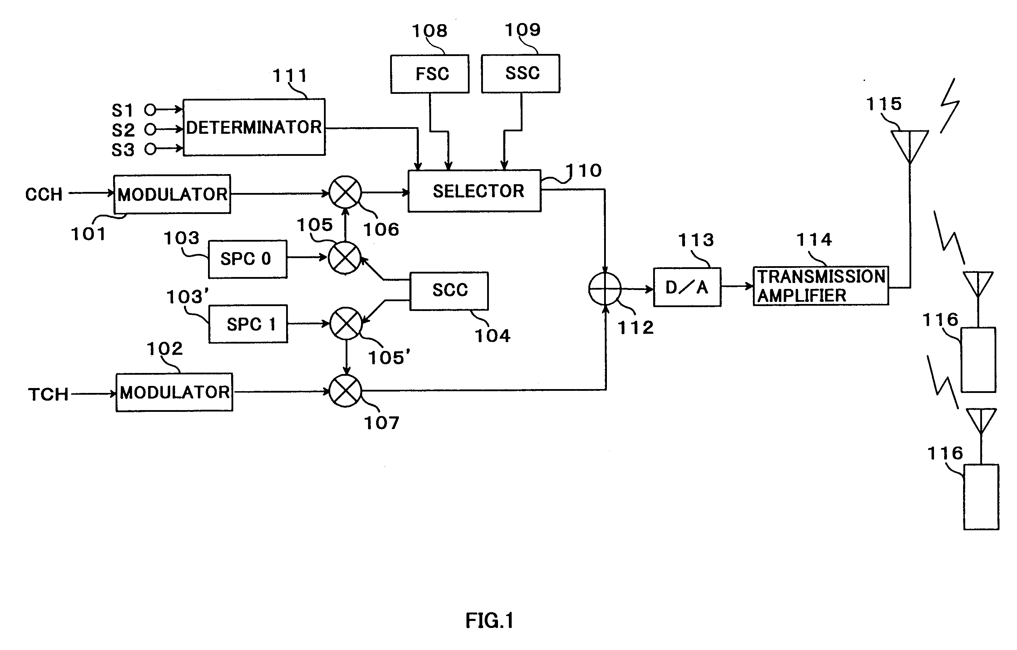

The radio communication base station apparatus according to Embodiment 1 of the present invention is explained with reference to the attached drawings. FIG. 1 is an outlined block diagram of the radio communication base station apparatus according to Embodiment 1

In FIG.1, modulator 101 carries out predetermined data modulation on a control channel signal (CCH). Modulator 102 carries out predetermined data modulation on a communication channel signal (TCH).

Spreading code generator 103 generates a spreading code (SPC0) to be multiplied by the control channel signal (CCH). Spreading code generator 103' generates a spreading code (SPC1) to be multiplied by the communication channel signal (TCH). Scrambling code generator 104 generates a scrambling code (SCC) specific to each base station. These codes (SPC0, SPC1 and SCC) are multiplied by the control channel signal (CCH) and communication channel signal (TCH) as appropriate through multipliers 105, 105', 106 and 107.

Furthermore, first search code (FSC) generator 108 and second search code (SSC) generator 109 generate mutually different search codes. The first search code (FSC) is used to detect chip synchronization and reception timing. The second search code (SSC) is used to identify a scrambling code group.

The first search code (FSC) can be identical to the spreading code (SPC0) generated by spreading code generator 103. In this case, first search code (FSC) generator 108 can also be used as spreading code generator 103.

The second search code (SSC) is a code different from the first search code (FSC). The second search code (SSC) may be of a type of conventional search code or of a type identifying a scrambling code group in combination with the first search code (FSC).

In the latter, it is also possible to provide a plurality of short codes other than the first search code (FSC) and second search code (SSC), and combine the plurality of short codes to identify a scrambling code group. This method allows each mobile station to identify scrambling codes much more quickly.

Selector 110 switches between the first search code (FSC) and second search code (SSC) and inserts the selected code into the control channel signal (CCH). Selector 110 transmits the first search code (FSC) and second search code (SSC) together in a same time zone or transmits them separately in different time zones, under the instruction of determinator 111.

Determinator 111 makes a determination to control the switching timing of selector 110. This determinator 111 determines the output timing of a search code according to various conditions input as appropriate.

More specifically, determinator 111 controls selector 110 by determining whether selector 110 outputs the first search code (FSC) and second search code (SSC) together in a same time zone or outputs them separately in different time zones according to, for example, the transmission power ratio between the search code part and CCH data part. In the case that selector 110 outputs the first search code (FSC) and second search code (SSC) separately in different time zones, determinator 111 performs switching control to determine which of the two should be output.

This determinator 111 receives as its inputs transmission power ratio S1 between the search code part and CCH data part, number of multiplexed channels S2 and ratio S3 of total transmission power of other channels to the transmission power of the CCH data part. How determinator 111 makes a determination using these inputs will be described in detail later.

Adder 112 adds up the output signal from multiplier 107 and the output signal from selector 110 as appropriate. The output of this adder 112 is amplified by transmission amplifier 114 via D/A converter 113 and then transmitted by radio via antenna 115.

Moreover, the transmission signal from the radio communication base station apparatus above is received by radio communication terminal apparatus 116. Radio communication terminal apparatus 116 can detect a search code sent by the radio communication base station apparatus with appropriate power and perform cell search.

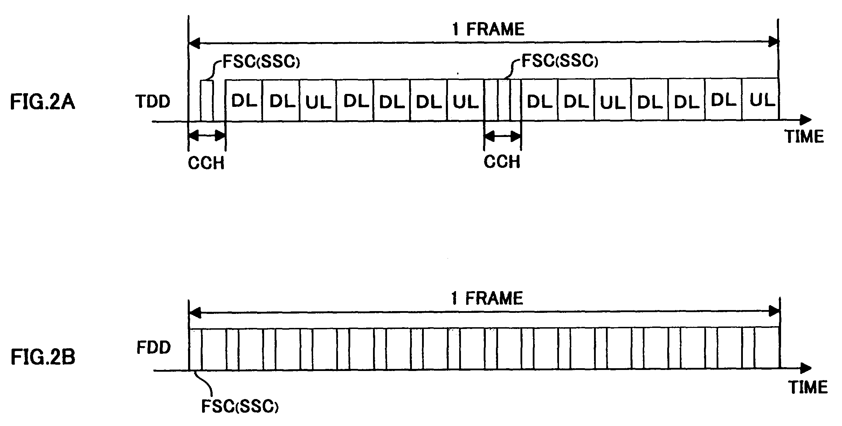

The transmission operation by the radio communication base station apparatus with such a configuration is explained below with reference to a transmission signal format shown in FIG.2 to FIG.5.

FIG.2 shows a frame format of a signal transmitted from the radio communication base station apparatus above. In the case of TDD, each frame has a 16-slot configuration according to a TDMA structure as shown in FIG.2A. Furthermore, search codes are placed in the control channel signals (CCH) transmitted with two timings in one frame as shown in the figure. In the case of FDD, each frame has a 16-slot configuration, with one search code placed in each slot as shown in FIG.2B.

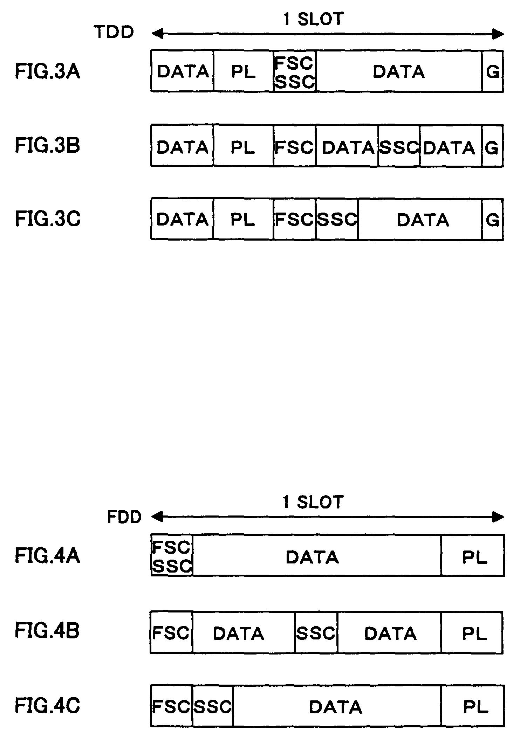

FIG.3 shows a transmission slot format of a control channel signal (CCH) including the search code part above in the TDD system. As shown in FIG.3A, one slot is formatted with control data (DATA), pilot symbol (PL), search codes (FSC, SSC), control data (DATA) and guard time (G), in that order.

When a search code is transmitted, determinator 111 compares a transmission power peak value of the search code part in the case that the first search code (FSC) and the second search code (SSC) are multiplexed and a transmission power peak value of the CCH data part . In the case that the ratio of the transmission power of the CCH data part is higher than that of the search code part, the first search code (FSC) and the second search code (SSC) are transmitted multiplexed in a same time zone as shown in FIG.3A.

On the contrary, in the case that the ratio of the transmission power of the CCH data part is equal to or lower than that of the search code part, the first search code (FSC) and the second search code (SSC) are transmitted distributed in different time zones. The method of distributing the two search codes can be determined appropriately according to the system to which the present invention is applied. For example, as shown in FIG.3B, the first search code (FSC) and the second search code (SSC) can be transmitted with a certain distance in between or as shown in FIG.3C, the first search code (FSC) and the second search code (SSC) can be placed next to each other. Timing control over switching between the first search code (FSC), the second search code (SSC) and control data is performed by selector 110.

In this way, the transmission power of the search code part does no longer show an extreme peak, and a variation in the amplification factor of transmission amplifier 114 before and after transmission of the search code part remains within a certain range. Therefore, the radio communication base station apparatus can always transmit with appropriate transmission power without the need for a high-performance transmission amplifier with quick response to an increase/decrease of the amplification factor.

On the other hand, FIG. 4 shows a transmission slot format of a control channel signal (CCH) including the search code part above according to an FDD system. One slot is formatted with search codes (FSC, SSC), control data (DATA) and pilot symbol (PL), in that order.

As in the case of the TDD system, in the case that the ratio of the transmission power of the CCH data part is higher than that of the search code part, the first search code (FSC) and second search code (SSC) are transmitted multiplexed in a same time zone as shown in FIG.4A.

On the contrary, in the case that the ratio of the transmission power of the CCH data part is equal to or lower than that of the search code part, the first search code (FSC) and second search code (SSC) are transmitted distributed in different time zones. The method of distributing the two search codes is the same as that in the TDD system. That is, as shown in FIG.4B, the first search code (FSC) and the second search code (SSC) can be transmitted with a certain distance in between or as shown in FIG.4C, the first search code (FSC) and the second search code (SSC) can be transmitted placed next to each other. Switching timing is controlled by selector 110.

As shown above, in the case that the ratio of the transmission power of the CCH data part is equal to or lower than that of the search code part, the first search code (FSC) and second search code (SSC) are distributed in different time zones and in this way, a variation in the amplification factor of transmission amplifier 114 before and after transmission of the search code part remains within a certain range. Therefore, the radio communication base station apparatus can always transmit with appropriate transmission power without the need for a high-performance transmission amplifier with quick response to an increase/decrease of the amplification factor.

Then, how determinator 111 determines whether the first search code (FSC) and second search code (SSC) are transmitted in a same time zone or distributed in different time zones is explained.

There are possible determination parameters such as the transmission power ratio between the search code part and the CCH data part, the number of multiplexed channels, the ratio of the total transmission power of other channels to the transmission power of the CCH data part, etc.

In order for determinator 111 to control switching timing of the search code based on the transmission power ratio between the search code part and the CCH data part taking into account the aforementioned various conditions, determinator 111 needs to carry out the following calculation, for example:

Suppose $P_{CCH}$ is the transmission power of the CCH data part. $P_{SH}$ is the transmission power of the search code part (here, suppose the two search codes have equal power), $P_{OTH}$ is the transmission power of other channels signal which is multiplexed with the CCH data part (here, suppose all channels have this same value), N is the maximum number of multiplexing channels (except control channel) and $P_{max}$ is the maximum transmission power. Then, determinator 111 calculates $\alpha$ from the following calculation:

$$\alpha = (P_{SH} \times 2 + P_{OTH} \times N)/(P_{CCH} + P_{OTH} \times N)$$

Calculating $\alpha$ in this way allows the transmission power ratio to be calculated taking account of the operating power of the transmission amplifier during an actual communication, making it possible to perform a communication with power according to the capacity of the transmission amplifier and perform appropriate system design.

Determinator 111 sets certain threshold $\beta$ for maximum transmission power $P_{max}$ of transmission amplifier 114. Then, in the case that calculation result $\alpha$ is equal to or smaller than threshold $\beta$, determinator 111 controls selector 110 so that the first search code (FSC) and the second search code (SSC) are transmitted in a same time zone. On the contrary, if calculation result cx exceeds threshold β, determinator 111 controls selector 110 so that the first search code (FSC) and the second search code (SSC) are transmitted distributed in different time zones. This allows the transmission timing of the search code to be controlled according to the maximum transmission power of the transmission amplifier used. It is also possible to perform flexible system design according to the capacity of the transmission amplifier.

It is necessary to determine this threshold β according to the system taking into account the initial synchronization characteristic of the mobile station when determining an optimal cell connected or detecting the reception timing, and the characteristic of the mobile station of monitoring other cells when measuring the reception level of peripheral cells and detecting synchronization timing, etc.

Regarding transmission power measurement, an average value may be calculated for every slot or every frame or a peak value for a certain time period may be detected in any cases.

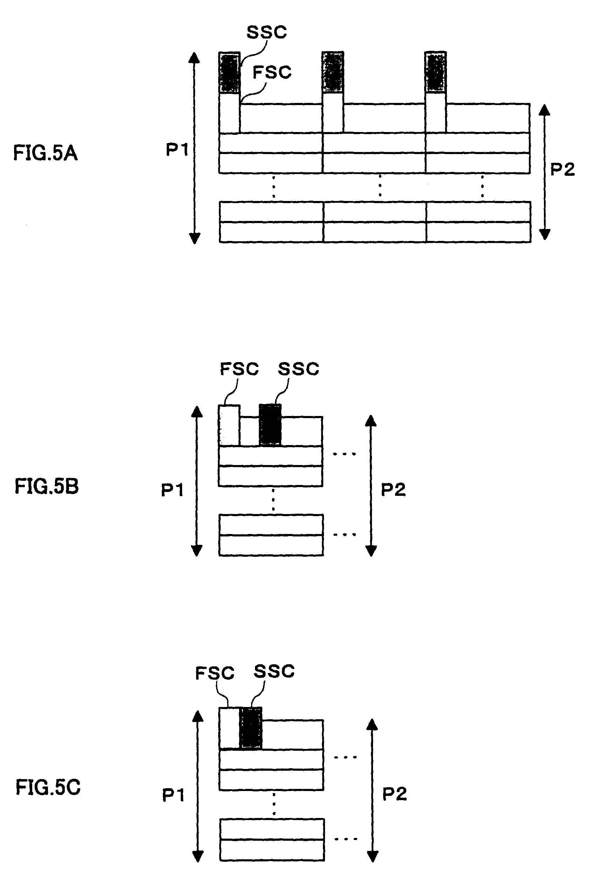

FIG.5 is a conceptual diagram showing the transmission power level of the search code part and the transmission power level of the CCH data part in the case of an FDD system.

Here, as the initial condition, suppose the first search code (FSC) and the second search code (SSC) are set so as to be transmitted in a same time zone. Thus, suppose the transmission power (P1) of the search code part and the transmission power (P2) of the CCH data part are at the levels as shown in FIG.5A. Determinator 111 carries out the above calculation in this state. Then, in the case that calculation result $\alpha$ exceeds threshold β , determinator 111 controls selector 110 so that the first search code (FFC) and the second search code (SFC) are distributed in different time zones. As a result, the placement of the search codes and the transmission levels are as shown in FIG.5B or FIG.5C.

In the state as shown in FIG.5B and FIG.5C, the transmission power does not change drastically before and after transmission of the search codes, suppressing peaks of the search code part.

Embodiment 1 above was explained assuming that the first search code (FSC) and the second search code (SSC) are used and the sum of both transmission power levels is compared with the transmission power of the CCH data part. However, the number of search codes used can be a plural number exceeding 2. Moreover, instead of calculating the ratio of the transmission power of the search code part to the transmission power of the CCH data part during a communication, the system can also be designed so that search codes are distributed taking account of the capacity of the transmission amplifier.

In this case, the system is designed so that calculations performed by determinator 111 are carried out beforehand and search codes are distributed in different time zones. That is, search codes can be distributed so that the difference between the transmission power of the search code part and the transmission power of the CCH data part falls within the allowable range of speed response to variations in the amplification factor of the transmission amplifier used. In other words, search codes can be distributed according to the capacity of the transmission amplifier used in such a way as to prevent variations in the amplification factor of the transmission amplifier based on the difference between the transmission power of the search code part and the transmission power of the CCH data part. In this way, designing the system according to the transmission amplifier used can achieve a cost reduction of the transmission amplifier.

In this way, the present embodiment prevents a plurality of search codes from being transmitted multiplexed in a same time zone, and therefore the transmission power of the search code part will no longer increase extremely compared with the transmission power of the CCH data part. Therefore, the ratio of the transmission amplifier peak power to the average power can be suppressed reliably, thus achieving a reduction of transmission power of the transmission amplifier, reduction in the size of the transmission amplifier and cost reduction.

(Embodiment 2)

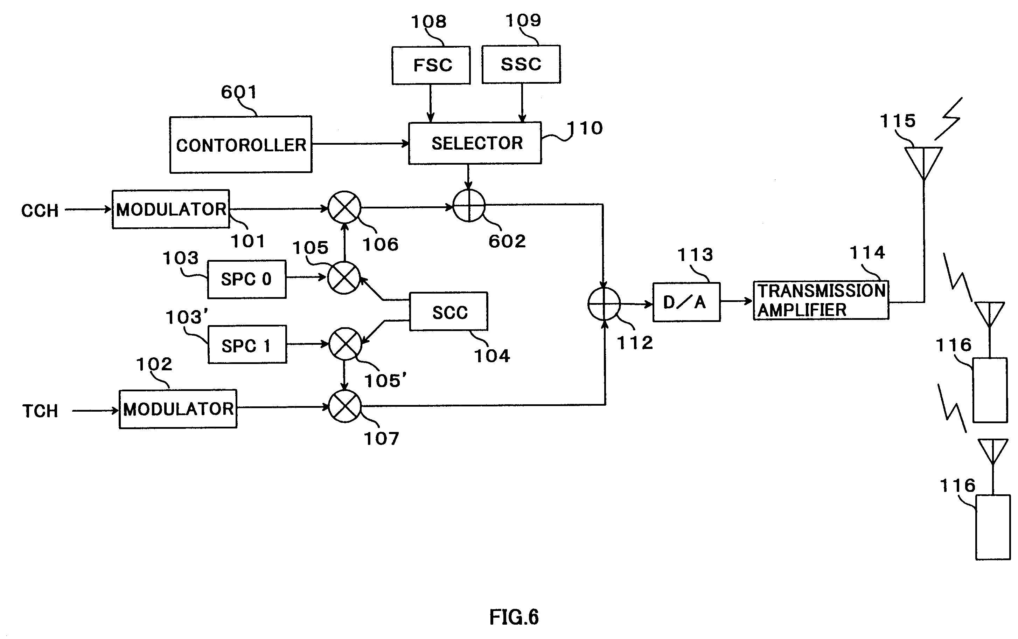

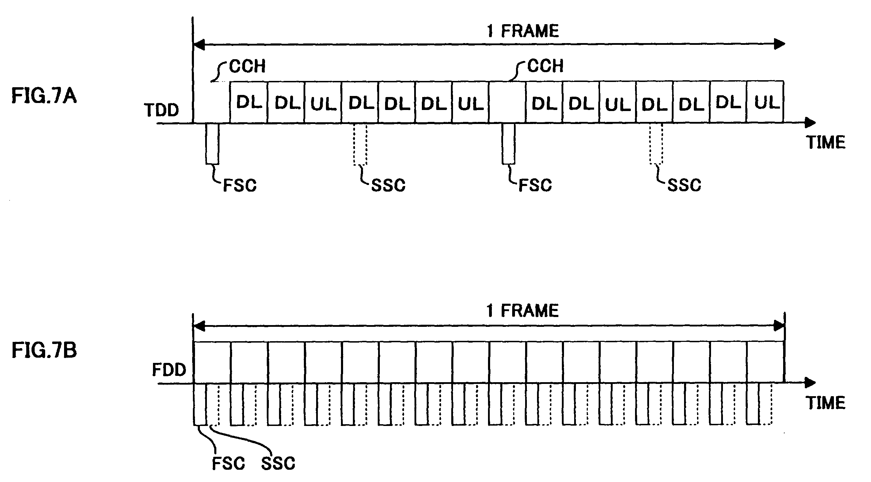

Then, the radio communication base station apparatus according to Embodiment 2 of the present invention is explained using FIG.6 and FIG.7. FIG.6 is an outlined block diagram of the radio communication base station apparatus according to Embodiment 2.

The radio communication base station apparatus of Embodiment 2 has virtually the same basic configuration and basic operation as those of Embodiment 1, and therefore the same components are assigned the same codes and their explanations are omitted. Embodiment 2 is different from Embodiment 1 in that search codes can be switched by controller 601 and adder 602 is provided so that search codes are transmitted code-multiplexed with control channel signals and communication channel signals.

First, the same calculation as that by determinator 111 of Embodiment 1 is carried out beforehand. Controller 601 is set in such a way as to output a signal to control switching of search code transmission with a timing according to the calculation result to selector 110. As determination parameters used as the criteria for search code switching, the transmission power ratio between the search code part and CCH data part, the number of multiplexed channels, the ratio of the total transmission power of other channels to the transmission power of the CCH data part, etc. are used as in the case of Embodiment 1.

Furthermore, adder 602 multiplexes search codes (FSC, SSC) with control channel signals and communication channel signals with a timing specified by controller 601.

FIG.7 shows a frame format of a transmission signal after search codes have been distributed. In the case of a TDD system shown in FIG.7A, search codes (FSC, SSC) in a control channel signal are code-multiplexed with a communication channel signal (CCH) and downlink control channel signal (DL). In the case that search code peaks need to be suppressed, selector 110 selectively outputs the first search code (FSC) and the second search code (SSC) with predetermined timings under the instruction of controller 601. The output search codes are transmitted code-multiplexed by adder 602 and adder 112. As a result, transmission timings of the first search code (FSC) and the second search code (SSC) are as indicated by FSC and SSC, respectively in FIG.7A.

In the present embodiment, there are no particular restrictions between the transmission timings of search codes, communication channel signal (CCH) and downlink control channel signal (DL). Therefore, the present embodiment is effective particularly in a system using a system (dynamic channel assign system) that changes channel positions between neighboring cells according to the situation using time slots as resources.

As shown above, in the case that code-multiplexing search codes with control channel signals and communication channel signals, it is possible to fix the control channel signals to channel 1 or fix search codes to channel 1. Both signals can be placed arbitrarily.

In the present embodiment, search codes are code-multiplexed in the case of an FDD system shown in FIG.7B as in the case of the TDD system above. In the case that search code peaks need to be suppressed, selector 110 selectively outputs the first search code (FSC) and the second search code (SSC) with a predetermined timing. The output search codes are transmitted code-multiplexed by adder 601 and adder 112. As a result, transmission timings of the first search code (FSC) and the second search code (SSC) are as indicated by FSC and SSC, respectively in FIG.7B.

As shown above, in the case that, for example, the rate of the transmission power of the CCH data part is equal to or lower than that of the search code part, the first search code (FSC) and the second search code (SSC) are code-multiplexed with the control data and transmission data, etc. and then distributed in time zones, making it possible to suppress peaks of the search code part. Furthermore, in the present embodiment, timings of search code transmission and search code switching are calculated according to the transmission amplifier used beforehand and they are set in the controller beforehand, thus it is possible to perform more appropriate system design.

It is naturally possible to change whether search codes are transmitted using control channels or not or with what timing search codes are switched, or when search code switching timing is determined, etc.

As explained above, the present invention, regardless of which of a TDD system or an FDD system is used, can suppress peaks of the search code part according to system conditions. Therefore, the present invention can reduce the size, cost and power consumption of the transmission amplifier.

The present invention is not limited to the above described embodiments, and various variations and modifications may be possible without departing from the scope of the present invention.

This application is based on the Japanese Patent Application No.HEI 11-051060 filed on February 26, 1999, entire content of which is expressly incorporated by reference herein.

**Claims**

1. A radio communication base station apparatus comprising:

   a search code generator(108,109) that generates a plurality of search codes used for cell search;
   a selector(110) that selects search codes to be transmitted from among said plurality of search codes; and
   a transmission controller(111,601) that places the search codes selected by this selector in predetermined positions of a transmission slot, amplifies by a transmission amplifier and transmits the search codes.

2. The radio communication base station apparatus according to claim 1, wherein the transmission controller(111,601) transmits a plurality of search codes distributed in different time zones and thereby suppressing peak power of the transmission amplifier during transmission of search codes.

3. The radio communication base station apparatus according to claim 2, wherein in the case that the transmission power ratio between a search code part and a data part is higher than a threshold predetermined according to maximum transmission power of the transmission amplifier, the transmission controller(111,601) transmits a plurality of search codes distributed in different time zones.

4. The radio communication base station apparatus according to claim 3, wherein the transmission controller(111,601) calculates the transmission power ratio taking account of the transmission power of other channel signals multiplexed with the search code part and the data part.

**5.** The radio communication base station apparatus according to claim 3, wherein the transmission controller(111,601) calculates the transmission power ratio after adding the transmission power of other channel signals to be multiplexed and transmitted to the transmission power of the search code part and the data part.

**6.** A radio communication terminal apparatus(116) that executes cell search by receiving a transmission signal from the radio communication base station apparatus according to claim 1.

**7.** A radio transmission method, suppressing peak power of a transmission amplifier during transmission of search codes by transmitting a plurality of search codes used for cell search distributed in different time zones.

**8.** The radio communication method according to claim 7, wherein in the case that the transmission power ratio between the search code part and the data part is higher than a threshold predetermined according to maximum transmission power of the transmission amplifier, a plurality of search codes are transmitted distributed in different time zones.

**9.** The radio communication method according to claim 8, wherein the transmission power ratio is calculated taking account of the transmission power of other channel signals to be multiplexed with a search code part and a data part.

**10.** The radio communication method according to claim 8, wherein the transmission power ratio is calculated after adding the transmission power of other channel signals to be multiplexed and transmitted to the transmission power of the search code part and the data part.

**11.** A radio communication system design method comprising the steps of:

calculating beforehand a threshold which is a reference to determine whether a plurality of search codes are distributed in different time zones or not;
calculating beforehand a maximum value of a transmission power ratio between a search code part and a data part; and
transmitting a plurality of search codes distributed in different time zones, thereby determining transmission timings of search codes so that said transmission power ratio does not exceed said threshold.

**12.** The radio communication system design method according to claim 11, calculating the transmission power ratio taking account of the transmission power of other channel signals to be multiplexed with the search code part and the data part.

**13.** The radio communication system design method according to claim 11, calculating the transmission power ratio after adding the transmission power of other channel signals to be multiplexed and transmitted to the transmission power of the search code part and the data part.

FIG.1

FIG.2A

FIG.2B

EP 1 032 233 A2

TDD

1 SLOT

FIG.3A

| DATA | PL | FSC SSC | DATA | G |

FIG.3B

| DATA | PL | FSC | DATA | SSC | DATA | G |

FIG.3C

| DATA | PL | FSC | SSC | DATA | G |

FDD

1 SLOT

FIG.4A

| FSC SSC | DATA | PL |

FIG.4B

| FSC | DATA | SSC | DATA | PL |

FIG.4C

| FSC | SSC | DATA | PL |

FIG.5A

SSC

FSC

P1

P2

FIG.5B

FSC  SSC

P1

P2

FIG.5C

FSC  SSC

P1

P2

FIG.6

EP 1 032 233 A2

EP 1 032 233 A2

FIG.7A

FIG.7B